· Europäisches Patentamt

(19) European Patent Office

Office européen des brevets

(11) Numéro de publication: **0 285 485 B1**

(12) **FASCICULE DE BREVET EUROPEEN**

(45) Date de publication du fascicule du brevet:
23.05.90

(51) Int. Cl.⁵: **F23G 7/06, C01B 33/18**

(21) Numéro de dépôt: 88400612.3

(22) Date de dépôt: 15.03.88

(54) **Procédé et dispositif de destruction d'effluents gazeux toxiques.**

(30) Priorité: 18.03.87 FR 8703729

(43) Date de publication de la demande:
05.10.88 Bulletin 88/40

(45) Mention de la délivrance du brevet:
23.05.90 Bulletin 90/21

(84) Etats contractants désignés:
BE CH DE ES FR GB IT LI NL SE

(56) Documents cités:
EP-A- 0 001 437
EP-A- 0 160 524
FR-A- 2 468 071
GB-A- 708 970
GB-A- 2 136 547
US-A- 2 333 948

PATENT ABSTRACTS OF JAPAN,
vol. 7, no. 283 (M-263)[1428], 16 décembre 1983, page 100 M 263; & JP-A-58 158 413 (ORINPIA
KOGYO K.K.) 20-09-1983

(73) Titulaire: L'AIR LIQUIDE, SOCIETE ANONYME POUR
L'ETUDE ET L'EXPLOITATION DES PROCEDES
GEORGES CLAUDE, 75, Quai d'Orsay, F-75321 Paris
Cédex 07(FR)

(72) Inventeur: Politi, Jean-Marie, 10, rue Alfred de Musset,
F-77340 Pontault Combault(FR)
Inventeur: Gendrot, Michèle, 39, avenue du Général
Michel Bizot, F-75012 Paris(FR)
Inventeur: Akaoka, Haruko, 6, rue Transfit Appt No. 5,
Agdal Rabat(MA)

(74) Mandataire: Sadones Laurent, Renée et al, L'AIR
LIQUIDE 75, quai d'Orsay, F-75321 Paris Cédex 07(FR)

## Description

L'invention concerne une installation de destruction par combustion d'effluents gazeux toxiques du genre comprenant un brûleur constitué par une série de buses concentriques, avec une buse d'injection de l'effluent à détruire disposée axialement et entourée d'une buse d'alimentation en gaz combustible principal, avec plusieurs viroles concentriques entourant la buse d'alimentation en gaz combustible principal et servant à l'alimentation en comburant gazeux, tel que décrit par exemple dans le document GB-A 708 970. Ces brûleurs qu'on a proposé d'utiliser pour la destruction de silane présentent cependant cet inconvénient de provoquer l'accrochage d'oxydes à l'extrémité de la buse de combustion, notamment lorsque la concentration des oxydes dans les fumées est importante. Or la présence de ces oxydes à l'extrémité de la buse de combustion provoque des pertes de charge parfois incompatibles avec le bon fonctionnement des installations industrielles placées en amont du système du combustion du silane pouvant conduire d'ailleurs, dans certains cas, au bouchage complet de la buse d'injection. En outre, selon la disposition du système de combustion, on constate dans certains cas, une accumulation d'oxydes qui nuit au bon fonctionnement du système en bouchant les arrivées d'air et en gênant le développement normal de la flamme pilote de combustion.

La présente invention a pour objet d'éviter l'accrochage des oxydes à l'extrémité de la buse de combustion en favorisant la formation d'oxydes pulvérulents dans les fumées de combustion.

Selon l'invention, les débouchés des différentes viroles de distribution de gaz comburant, sauf la plus interne, sont étagées axialement par rapport au débouché de la buse d'alimentation en gaz combustible principal, de façon à être de plus en psus saillant vers l'avant du brûleur.

Grâce à l'effet de protection dû au gainage saillant vers l'avant de l'effluent contenant le silane, effectué par le gaz combustible principal, on évite le contact immédiat de cet effluent avec l'air issu du brûleur et on reporte ainsi la combustion nettement au delà du nez du brûleur. La différence essentielle entre l'invention et la combustion classique est que, dans cette dernière, on s'efforce de créer des turbulences pour accrocher la flamme au nez du brûleur, alors que selon la présente invention, on s'efforce au contraire de rester le plus longtemps possible en flux laminaire, au delà du nez du brûleur, pour repousser la zone d'inflammation et de formation d'oxyde de silicium (ou de tout autre oxyde solide), dans une partie de la chambre de combustion où il n'y a pas de possibilité d'accrochage des oxydes formés, en sorte que ceux-ci sont entrainés par les fumées.

Selon une forme particulière de mise en œuvre, le gaz combustible principal est dilué par un gaz inerte, pour diminuer la consommation de gaz combustible, maintenir ou augmenter son débit global en conservant l'effet de gaine gazeuse de protection vis à vis de l'oxygène pour l'effluent gazeux à détruire.

Le combustible principal est constitué par un combustible gazeux tel que l'hydrogène, le méthane, le gaz naturel, les gaz manufacturés, le propane, le butane, etc..., ou un mélange de ces gaz.

Le gaz combustible principal peut être dilué par un gaz inerte, pur ou en mélange, tel que l'azote, l'argon, l'anhydride carbonique, l'hexafluorure de soufre, les halocarbones.

Le gaz comburant est de l'air, le cas échéant enrichi en oxygène, ou un autre gaz comburant, et dans une forme préférentielle, le gaz comburant est de l'oxygène industriel.

Avantageusement, le débit du courant de gaz comburant limitrophe du courant de gaz combustible principal est inférieur à celui nécessaire pour assurer l'apport d'oxygène de combustion complète du combustible principal.

Lorsque l'installation comporte différents collecteurs d'effluent se réunissant dans la buse d'injection unique de brûleur, la buse axiale de brûleur est de taille suffisante pour que les variations de débit des effluents dans les différents collecteurs ne provoquent que des variations de perte de charge et de pression insignifiantes pour éviter tout retour d'effluent d'un collecteur d'alimentation dans une autre.

Selon une modalité préférentielle d'écoulement des différents gaz, les gaz effluents à détruire, le gaz combustible principal et le gaz comburant s'écoulent à vitesses substantiellement constantes sans turbulences excessives, et sous forme laminaire.

Avantageusement, la chambre de combustion est démunie de tout obstacle à l'écoulement, tel que décrochement, palier, méplat, ailette, destiné à augmenter la turbulence et à favoriser l'accrochage de la flamme, sauf, éventuellement, sur la virole périphérique.

Selon une forme de réalisation, la buse axiale d'éjection des effluents gazeux à détruire se trouve située en retrait par rapport au débouché de la buse d'injection du gaz combustible. De préférence une paroi de buse formant un courant annulaire de gaz comburant se termine par un bord de fuite biseauté et la buse de gaz comburant limitrophe de la buse d'injection de combustible principal est équipée de viroles déflectrices de limitation de vitesse d'écoulement du gaz comburant.

Lors de la mise en œuvre d'une telle installation, on créée ainsi une différentiation des vitesses d'éjection du gaz comburant d'alimentation du brûleur entre les différents courants annulaires grâce à des dispositifs limiteurs de débit, placés à l'arrière des viroles déflectrices formant ces courants, la vitesse la plus faible étant réservée au courant de gaz comburant limitrophe de la buse d'injection du combustible principal, et la plus forte à un des deux courants situés à la périphérie du brûleur si les vitesses d'éjection sont équivalentes, sinon au courant de gaz comburant situé à la périphérie du brûleur et, avantageusement, le rapport des vitesses d'écoulement gazeux est généralement compris entre les limites suivantes:

– vitesse d'écoulement du comburant limitrophe du combustible par rapport à la vitesse d'écoulement du combustible principal: de 1 à 3;

– vitesse d'écoulement de l'effluent par rapport à la vitesse d'écoulement du combustible: au moins de 0,1 à au moins 5, suivant la concentration des produits combustibles contenus dans l'effluent, l'élévation de vitesse d'écoulement étant proportionnelle à la concentration des produits combustibles et limitée par l'apparition de turbulences au niveau de la buse d'injection du combustible principal.

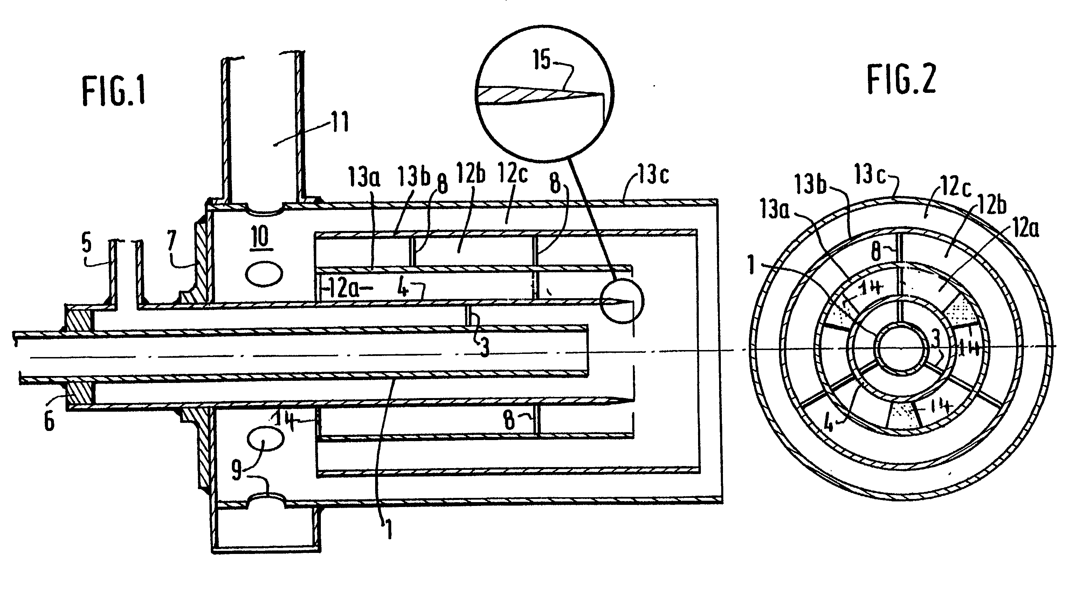

Le schéma d'un exemple du brûleur en coupe axiale est donné à titre d'exemple à la figure 1, tandis que la figure 2 en est une coupe transversale.

Le dispositif de destruction des effluents gazeux contenant du silane ou d'autres hydrures, ou produits utilisés dans l'industrie électronique ou toute autre industrie, comprend une buse 1 d'injection des effluents gazeux dans la chambre de combustion, dont la section est suffisante pour éviter la formation d'une perte de charge importante lors de la variation des débits d'effluents, et en particulier, d'éviter des contre-pressions et des retours indésirés d'une ligne dans l'autre lorsque plusieurs collecteurs d'effluents indépendants sont réunis à la même buse.

Des vannes automatiques d'isolement non représentés pilotées par le système de sécurité du brûleur, interdisent l'envoi de gaz à détruire dans le brûleur en cas d'arrêt e celui-ci.

Trois plots de centrage 3, situés au tiers antérieur de la longueur de la buse 1, permettent de la centrer dans la buse 4 d'arrivée du combustible principal. Un anneau de centrage et d'étanchéité par presse étoupe 6, situé à l'arrière de la buse 4, assure un complément de centrage coaxial de la buse 1, dans la buse 4.

La position de la buse 1 par rapport à l'extrémité de la buse 4 peut être ajustée par déplacement axial de la buse 1.

Le gaz combustible prinoipal, constitué par un gaz inflammable tel que propane, butane, méthane, hydrogène ou gaz natural, ou tout autre mélange de gaz combustibles, est alimenté à partir d'une source extérieure non représentée par l'intermédiaire d'un organe de régulation et de mesure de débit. Ce gaz combustible peut être employé pur ou en mélange avec un gaz inerte, provenant d'une source extérieure non représentée, par l'intermédiaire d'un organe de régulation, suivi d'un système de mesure de débit.

Ce gaz combustible ou mélange combustible de gaz, pénètre dans la buse 4, par l'intermédiaire de la tubulure 5. Des plots de centrage 8, analogues aux plots 3, permettent de centrer les viroles (13a, 13b, 13c) par rapport à la buse 4, viroles qui forment ainsi trois conduits annulaires 12a, 12b, 12c de gaz comburant, alimentés par un collecteur 11 débouchant dans une boîte à air 10.

La boîte à air 10, la virole extérieure 13c et la buse 4 sont solidarisées par une plaque 7 qui forme la partie arrière du brûleur.

La virole extérieure 13c constitue l'enveloppe externe du brûleur; la boîte à air 10 est fixée à son extrémité arrière.

La boîte à air assure une répartition homogène de l'air entrant en 11 sur la totalité des sections des différents conduits annulaires d'air grâche à un dispositif de distribution, constitué par des trous 9, ou par tout autre moyen, grillage, membrane, matière poreuse, de diffusion de l'air entre la boîte à air 10 et l'intérieur de la partie arrière de la virole 13c.

L'extrémité libre de la virole externe 13c déborde largement au delà de l'extrémité de la buse de silane 1. Des essais ont permis de déterminer qu'un tel débordement est indispensable, sans pour autant, qu'au delà d'un débordement minimum, la position soit réellement critique.

Dans le conduit annulaire 12a entre virole intérieure 13a et buse de gaz combustible 4 sont ménagées des ailettes 14 rabattues vers la buse 4 qui permettent de diminuer le débit d'air passant dans le conduit 12a et d'ajuster ce débit de façon à disposer, dans ce premier conduit 12a, d'un défaut d'air par rapport à la quantité théorique nécessaire pour assurer la combustion complète du débit de gaz combustible passant par la buse 4. Ces ailettes assurent le centrage arrière de la virole 13a. On en a représenté trois à la figure 2 mais un plus grand nombre conviendrait.

L'extrémité avant de la virole 13b est dans une position intermédiaire entre les extrémités des viroles 13a et 13c. Cette position avancée est indispensable pour permettre un bon accrochage de la flamme, mais elle n'est pas cruciale, et on peut accroître cette avancée.

Par contre, il est toujours très important que les plots de centrage 8 soient toujours très en retrait des débouchés vers la chambre de combustion pour éliminer l'influence des turbulences provoquées par leur présence.

Des essais de traitement d'effluents gazeux contenant du silane ont été réalisés avec un brûleur tel que décrit ci-dessus.

La buse 1 est un tube de diamètre intérieur 42 mm et d'épaisseur 3 mm.

La buse de mélange combustible principal 4 est de diamètre intérieur 66 mm, d'épaisseur 5 mm.

Les viroles de répartition d'air 13a, 13b, 13c ont respectivement 120, 170 et 210 mm de diamètres intérieurs et 6,6 et 3 mm d'épaisseurs.

Les extrémités de la buse de silane 1 de la buse de gaz combustible 4 et de la gaine déflectrice 13a ont été biseautées en 15 pour éviter des remous à ces endroits.

Dans ce brûleur, la buse centrale d'injection de l'effluent à traiter 1 est coulissante pour permettre de régler la position de la sortie de l'effluent par rapport à celle du combustible principal 4.

L'effluent gazeux à traiter utilisé pour nos essais, est du silane pur ou un mélange de silane dans de l'azote.

Le combustible principal est le propane pur ou un mélange de propane et d'azote.

Le débit d'air soufflé vers le brûleur est de 800 m³/h, avec la répartition en trois conduits 12a, 12b, 12c.

Conduit 12a: 30 m³/h

Conduit 12b: 370 m³/h

Conduit 12c: 400 m³/h

Dans tous les essais, la quantité d'air soufflé par la couronne 12a représente un défaut de 20 à 80% par rapport à la quantité stœchiométrique théorique d'air nécessaire à la combustion complète du combustible principal.

Avant chaque essai, la stabilité de la flamme a été vérifiée avec un débit d'effluents à détruire constitué de 0 à 10 m³/h d'azote pur.

Première série d'essais

Les débits de silane et d'air étant fixes, on a fait varier la concentration en propane dans le mélange combustible principal avec un débit total constant de 6 m³/h.

Le débit d'air est de 800 m³/h.

L'effluent à traiter est du silane pur avec un débit de 1 m³/h.

Pour obtenir la même quantité d'oxyde de silicium produit, la durée de brûlage a été de 6 minutes pour chaque essai.

La buse d'introduction du silane 1 a été reculée de 40 mm et les viroles déflectrices 13b et 13c avancées respectivement de 50 et 60 mm par rapport au débouché de la virole 13a.

| DEBIT DE PROPANE | CONCENTRATION DE PROPANE | DEPOT |
|---|---|---|
| 2 m³/h | 30% | Très léger dépôt sur la buse 1 |
| | | Pas de dépôt sur 13a, 13b et 13c |
| 3 m³/h | 50% | Pas de dépôt |
| 6 m³/h | ·100% | Pas de dépôt |

Deuxième série d'essais

La configuration du bruleur de la première série d'essais a été conservée ainsi que les débits de silane et d'air.

La concentration de propane dans le mélange combustible a été fixée à 50%.

Des débits différents du mélange combustible ont été mis en œuvre.

| DEBIT DE PROPANE | DEBIT D'AZOTE | DEBIT TOTAL | DEPOT |
|---|---|---|---|
| 1,5 m³/h | 1,5 m³/h | 3 m³/h | Dépôt sur 1, 4 et 13a |
| 3 m³/h | 3 m³/h | 6 m³/h | Pas de dépôt |
| 6 m³/h | 6 m³/h | 12 m³/h | Pas de dépôt |

Pour le dernier essai, la buse centrale 1 a été reculée de 12 mm par rapport au débouché de la buse de gaz combustible 4.

Troisième série d'essais

La configuration du brûleur exceptée la buse 1, les débits de silane et d'air sont maintenus comme aux précédents essais.

Le débit du combustible est fixé à 6 m³/h. Sa composition est de 50% de propane et d'azote.

La position axiale de la buse 1 a été plus ou moins reculée par rapport au débouché de la buse 4.

4

| DISTANCE DE RECUL DE LA BUSE 1 | DEPOT | |
|---|---|---|
| 0 mm | Dépôt sur les buses 1 et 4 | |
| | Pas de dépôt sur 13a, 13b, 13c | |
| 12 mm | Dépôt sur les buses 1 et 4 | |
| | Pas de dépôt sur 13a, 13b, 13c | |
| 25 mm | Dépôt sur la buse 1 | |
| | Pas de dépôt sur 4, 13a, 13b, 13c | |
| 31 mm | Léger dépôt sur la buse 1 | |
| | Pas de dépôt sur 4, 13a, 13b, 13c | |
| 40 mm | Pas de dépôt | |
| 51 mm | Pas de dépôt | |

## Quatrième série d'essais

Le débit d'air est toujours maintenu à 800 m³/h.
Le débit du mélange combustible (50% de propane et d'azote) est fixé à 6 m³/h.
La buse de silane 1 est positionnée à 40 mm en arrière de la buse 4. Les autres paramètres de la configuration du brûleur sont maintenus comme aux essais précédents.
Le débit et la concentration de silane dans le mélange gazeux à traiter ont été variés, et on atteint plusieurs m³/heure.

| DEBIT DE SILANE | DEBIT D'AZOTE DE DILUTION | DEBIT TOTAL DU MELANGE | DUREE D'ESSAI | DEPOT |
|---|---|---|---|---|
| 1 m³/h | 0 m³/h | 1 m³/h | 6 mn | Léger dépôt sur la buse 1 |
| 1 m³/h | 5 m³/h | 6 m³/h | 6 mn | Pas de dépôt |
| 6 m³/h | 0 m³/h | 6 m³/h | 1 mn | Pas de dépôt |

L'invention s'applique également au traitement d'effluents contenant du silane, et/ou tout autre produit utilisés dans l'industrie, notamment électronique, y compris la synthèse du silane, et en particulier des atomes de C12, F2, B, P, As, Se, Te, etc..., dans diverses combinaisons chimiques. Dans la suite de la description, on utilisera le terme silane pour désigner de tels produits et à la destruction d'effluents liquides (par exemple oxyde d'éthylène), véhiculés et pulvérisés à l'intérieur du conduit central, dans lequel circule un gaz neutre de balayage.

## Revendications

1. Installation de destruction d'effluents gazeux toxiques comprenant un brûleur constitué par une série de buses concentriques, avec une buse d'injection de l'effluent à détruire disposée axialement et entourée d'une buse d'alimentation en gaz combustible principal, avec plusieurs viroles concentriques entourant la buse d'alimentation en gaz combustible principal et servant à l'alimentation en comburant gazeux, caractérisée en ce que les débouchés de différentes viroles de distribution de gaz comburant, sauf la plus interne, sont étagées axialement par rapport au débouché de la buse d'alimentation en gaz combustible principal, de façon à être de plus en plus saillant vers l'avant du brûleur.

2. Installation de destruction de l'effluent gazeux toxique selon la revendication 1, caractérisé en ce que la buse axiale d'éjection des effluents gazeux à détruire se trouve située en retrait par rapport au débouché de la buse d'injeciton du gaz combustible.

3. Installation de destruction de l'effluent gazeux toxique selon la revendication 1, caractérisée en ce qu'une paroi de buse formant un courant annulaire de gaz comburant se termine par un bord de fuite biseauté.

4. Installation de distribution d'effluent gazeux toxique selon l'une quelconque des revendications 1 à 3, caractérisée en ce que la buse de gaz comburant limitrophe de la buse d'injeciton de combustible principal est équipée de viroles déflectrices de limitation de vitesse d'écoulement du gaz comburant.

**Patentansprüche**

1. Vorrichtung zur Vernichtung von giftigen Abgasen mit einem Brenner, der durch eine Reihe von konzentrischen Düsen gebildet ist, wobei eine Einspritzdüse für das zu vernichtende Abgas axial angeordnet ist und von einer Versorgungsdüse für brennbares Hauptgas umgeben ist, mit mehreren konzentrischen Ringen, welche die Versorgungsdüse für brennbares Hauptgas umgeben und der Versorgung mit gasförmigem Verbrennungsmittel dienen, dadurch gekennzeichnet, daß die Öffnungen der unterschiedlichen Verteilungsringe für das die Verbrennung bewirkende Gas außer dem innersten axial bezüglich der Versorgungsdüse für brennbares Hauptgas derart abgestuft sind, daß sie allmählich zur Vorderseite des Brenners vorspringen.

2. Vorrichtung zur Vernichtung giftiger Abgase nach Anspruch 1, dadurch gekennzeichnet, daß die axiale Ausstoßdüse für die zu vernichtenden Abgase bezüglich der Öffnung der Einspritzdüse für das brennbare Gas zurückspringend angeordnet ist.

3. Vorrichtung zur Vernichtung giftiger Abgase nach Anspruch 1, dadurch gekennzeichnet, daß eine Wand der Düse, welche einen ringförmigen Strom von die Verbrennung bewirkendem Gas bildet, in einer abgeschrägten Austrittskante endet.

4. Vorrichtung zur Vernichtung giftiger Abgase nach einem der Ansprüche 1 bis 3, dadurch gekennzeichnet, daß die Düse für die Verbrennung bewirkendes Gas, welche an die Einspritzdüse für den Hauptbrennstoff angrenzt, mit Ablenkringen ausgestattet ist für die Begrenzung der Fließgeschwindigkeit des die Verbrennung bewirkenden Gases.

**Claims**

1. Apparatus for destroying gaseous toxic effluents comprising a burner constituted by a series of concentric nozzles, with a nozzle for injection of the effluent to be destroyed arranged axially and surrounded by a main combustible gas supply nozzle, with several concentric ferrules surrounding the main combustible gas supply nozzle and serving to supply gaseous comburant, characterised that in the outlets of the different ferrules for distribution of comburent gas, except the innermost, are axially staggered relative to the outlet of the main combustible gas supply nozzle, in such a way to project further and further towards the front of the burner.

2. Apparatus for destruction of gaseous toxic effluent according to claim 1, characterised in that the axial nozzle for ejection for the gaseous effluents to be destroyed is set back relative to the outlet of the main combustible gas injection nozzle.

3. Apparatus for destruction of gaseous toxic effluent according to claim 1, characterised in that a nozzle wall forming an annular flow of comburent gas terminates in a bevelled leading edge.

4. Apparatus for distribution of gaseous toxic effluent according to any one of claims 1 to 3, characterised in that the comburent gas nozzle adjacent the main combustible gas injection nozzle is fitted with deflector plates for limiting the speed of flow of the comburent gas.

FIG.1

11

5   7

10

13a 13b 8 12b 12c 8          13c

15

FIG.2

EP 0 285 485 B1

13b  13c
13a        12c
12b
12a

1

8

14

14

3

4        14

12a   4

3

6

14

9

8

8

1